# FASCICULE DE BREVET EUROPEEN

(11) **EP 0 552 098 B1**
(45) Date de publication et mention de la délivrance du brevet: **11.09.1996**
(21) Numéro de dépôt: 93400071.2
(22) Date de dépôt: 13.01.1993
(51) Int. Cl.: G21C 3/07, C22C 16/00, C22F 1/18

(54) **Crayon de combustible nucléaire et procédé de fabrication de la gaine d'un tel crayon**
Kernbrennstab und Verfahren zur Herstellung seiner Hülle
Nuclear fuel rod and method to fabricate the cladding tube of the rod

(30) Priorité: 17.01.1992 FR 9200486
(43) Date de publication de la demande: 21.07.1993
(73) Titulaire: FRAMATOME, 92400 Courbevoie (FR); COGEMA COMPAGNIE GENERALE DES MATIERES NUCLEAIRES, F-78141 Velizy-Villacoublay (FR); ZIRCOTUBE, F-92084 Paris La Défense (FR)
(72) Inventeur: Mardon, Jean Paul, F-69300 Caluire (FR); Senevat, Jean, F-44250 St Brevin les Pins (FR)
(74) Mandataire: Fort, Jacques

(56) Documents cités:
- EP-A- 0 195 155
- EP-A- 0 301 295
- EP-A- 0 380 381
- EP-A- 0 415 134
- FR-A- 2 219 978

## Description

La présente invention concerne les crayons de combustible destinés à être incorporés dans les assemblages de combustible pour réacteur nucléaire refroidi et modéré par de l'eau, notamment dans les assemblages pour réacteur à eau sous pression.

Ces crayons sont constitués par des pastilles de combustible enfermées dans une gaine en alliage à faible absorption neutronique. La gaine doit remplir de nombreuses conditions dont certaines sont difficilement conciliables. Elle doit conserver son étanchéité et ses propriétés mécaniques sous irradiation à haute température et n'avoir qu'un fluage faible. Elle doit résister à la corrosion par le milieu aqueux qui l'entoure. Son interaction avec le combustible contenu dans la gaine,doit être réduite.

On a jusqu'ici surtout utilisé des gaines en un alliage à base de zirconium dit "Zircaloy 4" qui contient :
- 1,20 à 1,70% d'étain,
- 0,18 à 0,24% de fer,
- 0,07 à 0,13% de chrome,
le total des teneurs en fer et en chrome étant compris entre 0,28 et 0,37%.

Les normes concernant le "Zircaloy 4", désignées également par la référence UNSR 60804, limitent les teneurs en éléments autres que le zirconium, et ceux énumérés ci-dessus sauf en ce qui concerne l'oxygène, pour lequel il est simplement mentionné que la teneur doit être précisée dans chaque cas. La teneur en oxygène des "Zircaloy 4" habituels ne dépasse pas 0,12% et elle est généralement très inférieure.

Si la tenue mécanique de gaines en "Zircaloy 4" s'est révélée satisfaisante, on a en revanche constaté que leur corrosion par le milieu aqueux ambiant à haute température réduisait sensiblement la durée de maintien admissible en réacteur. On a déjà proposé d'écarter ce défaut par l'utilisation de gaines dites "duplex" ou "triplex" (FR-A-1 537 960 ; EP-A-212 351 ; US-A-4 649 023) comportant au moins une couche interne en "Zircaloy 4", ou en un alliage similaire, et une couche externe, nettement plus mince que la couche interne, en un alliage à base de zirconium résistant mieux à la corrosion que le "Zircaloy 4". On peut également citer le document EP-A-0 301 205 qui mentionne, pour constituer la couche externe, tout alliage de zirconium contenant du fer de chrome, du nickel et/ou du zinc à une teneur totale de 0,4 à 1% en poids, et/ou 0,2 à 3% en poids de niobium.

On a notamment proposé des gaines comportant une couche interne en "Zircaloy 4" et une couche externe constituée par un alliage à base de zirconium, à teneur réduite ou nulle en étain, mais contenant des éléments supplémentaires améliorant la résistance à la corrosion, tels que le niobium, le vanadium et le nickel (document EP-A-0 380 381.)

On sait en effet depuis longtemps (brevet US-A- 4 717 534) que les alliages Zr-Nb à 2,5% environ de niobium ont une bonne résistance à la corrosion en milieu aqueux à haute température.

La composition de l'alliage constitutif de la couche externe doit être telle que la gaine soit réalisable par colaminage ou co-extrusion, avec des taux de corroyage élevés à chaque étape de fabrication. Au surplus, la présence de la couche externe ne doit pas dégrader notablement les caractéristiques mécaniques de la gaine considérée dans son ensemble. Or, en première approximation, les propriétés mécaniques de la gaine résultent d'une somme des propriétés des deux couches, pondérée par un facteur représentant la fraction de l'épaisseur totale correspondant à chaque couche. Et il est bien connu que les alliages zirconiumniobium habituels, ayant une très faible teneur en oxygène, ont des propriétés mécaniques très inférieures à celles des Zircaloy.

La présente invention vise à fournir une gaine pour crayon de combustible nucléaire dont la gaine comporte au moins une couche interne en "Zircaloy 4" et une couche externe, plus mince que la couche interne, répondant mieux que les gaines antérieurement connues aux exigences de la pratique, notamment en ce qu'elle a une résistance notablement accrue à la corrosion par le milieu aqueux ambiant tout en conservant des caractéristiques mécaniques tout à fait comparables à celles d'une gaine massive en "Zircaloy 4".

Dans ce but, l'invention propose un crayon de combustible nucléaire suivant la revendication 1.

Dans une variante, une teneur de fer, de chrome ou de niobium de 0 A 0,05% est remplacée par une teneur équivalente de vanadium.

Dans le cas d'une couche externe contenant de l'étain et n'ayant pas une teneur appréciable de niobium, une teneur d'oxygène beaucoup plus élevée que dans les alliages types Zircaloy 2, 3 et 4 habituels permet d'obtenir des caractéristiques mécaniques se rapprochant de celles du Zircaloy 4, à condition que la gaine soit à l'état détendu.

Dans le cas d'une couche externe dont le seul additif métallique (à l'exception des impuretés inévitables) est le niobium, l'alliage à l'état détendu, même fortement chargé en oxygène, présente une tenue au fluage thermique très médiocre (insuffisante) ; cet inconvénient est écarté en retenant simultanément un alliage dopé en oxygène et on soumettant la gaine à un traitement thermique final de recristallisation.

L'invention propose également un procédé de fabrication d'une gaine utilisable dans un crayon du type ci-dessus défini.

Afin d'obtenir un tube duplex pour crayon combustible correspondant à la présente invention, on réalise une billette composite comprenant une partie interne en Zircaloy 4, notamment ayant une teneur en étain dans la partie basse des teneurs prévues par la norme, et une ébauche externe faite d'un alliage de zirconium-niobium-oxygène ou d'un alliage à base de zirconium contenant étain, fer, chrome et oxygène. L'assemblage des deux billettes est obtenu par soudage aux extrémités.

Les billettes ainsi obtenues pour les deux types d'alliages sont filées à chaud, typiquement à 650°C. C'est au cours de cette opération de cofilage que se réalise la liaison métallurgique entre les deux alliages de zirconium. Les ébauches de tube duplex ainsi obtenues sont transformés en tubes duplex finis par une succession de cycles thermo-mécaniques . Les dimensions des tubes-duplex finis sont typiquement de 9,50 mm de diamètre externe et 0,625 mm d'épaisseur ou 10,75 et 0,725 mm avec une couche externe en alliage à base de zirconium contenant du niobium et de l'oxygène (ou du fer, chrome, étain, oxygène) dont l'épaisseur est comprise entre 80 µm et 140 µm environ.

La gamme de traitements, effectués typiquement par laminage à froid à pas de pélerin, est identique pour les deux alliages étudiés, pour toutes les passes, en terme de taux de réduction en section et de facteur Q (rapport entre la variation d'épaisseur et la variation de diamètre), même avec des taux de déformation élevés. La transformation se passe sans difficultés, ni création de défauts du type fissures. Par contre les recuits intermédiaires de recristallisation et le recuit final sont adaptés à chacun des deux alliages.

Pour l'alliage zirconium, étain, fer, chrome, oxygène, les recuits de recristallisation intermédiaires sont réalisés entre 700°C et 750°C ; dans le cas de cinq passes, les deux premiers sont avantageusement à 735°C et les trois derniers à 700°C environ alors que le recuit final est conduit vers 485°C.

En ce qui concerne l'alliage zirconium, niobium, oxygène, les recuits de recristallisation intermédiaires entre passes de laminage sont réalisés d'abord à 580°C ± 15°C pour éviter la corrosion au cours des phases de laminage correspondantes; les trois autres peuvent être à 700°C ± 15°C pour que le Zircaloy 4 ait une bonne tenue en réacteur. Le recuit final est réalisé à 580°C environ.

Les gammes de transformation thermo-mécanique retenues pour les deux alliages conduisent, sur tube-duplex fini, à des tailles et distributions de précipités intermétalliques optimales vis-à-vis principalement de la corrosion généralisée, à savoir une précipitation fine (diamètre des précipités de l'ordre de 50 nm) et homogène pour l'alliage Zirconium, Niobium, Oxygène et une précipitation homogène et de taille suffisante (diamètre des particules intermétalliques supérieure à 0,18 µm) pour l'alliage zirconium, étain, fer, chrome, oxygène.

On donnera maintenant quelques résultats d'essais faisant apparaître l'intérêt des compositions de gaines conformes à l'invention.

### Compositions contenant de l'étain, à faible teneur en étain et teneur élevée en oxygène

Des essais ont d'abord été effectués pour déterminer les conséquences d'une réduction de la teneur en étain par rapport à celles que l'on trouve dans un Zircaloy 4 classique, ayant une teneur en oxygène de 0,12%, et des alliages de constitution de la couche externe, à faible teneur en étain pour réduire la corrosion dans le milieu aqueux à haute température.

Les écarts les plus importants portent sur la résistance au fluage thermique dans des conditions représentatives de celles que l'on trouve en réacteur à 400 °C, pendant 240 heures, sous une contrainte de 130 MPa.

La déformation diamétrale a été alors la suivante :
- alliage A (Zircaloy 4 à 1,5% d'étain et 0,12% d'oxygène) : 1,3%
- alliage B (Zircaloy 4 à 1,3% d'étain et 0,12% d'oxygène) : 1,5%
- alliage C : (alliage à 0,5% seulement d'étain, et 0,12% d'oxygène) : 3,6%
- alliage D (alliage à 0,5% d'étain et 0,19 à 0,2% d'oxygène) : 1,7 à 1,8%.

Ces résultats ont été obtenus avec un alliage à l'état détendu : on voit que l'augmentation substantielle de la teneur en oxygène permet d'obtenir, avec un alliage à très basse teneur en étain, une résistance au fluage thermique et donc sous irradiation presque équivalente à celle d'un Zircaloy 4. On retrouve donc des valeurs de fluage compatibles avec les exigences de conception d'un crayon combustible. De plus des essais de fluage en conditions representatives de celles de l'APRP, montrent, en particulier pour certaines températures (haut du domaine α, domaines α + β et β) que le comportement au fluage haute température de l'alliage D dopé en O₂ est comparable, voire meilleur, que celui des Zircaloy 4 A et B en terme de temps de rupture et de ductilité.

Des essais de mesure de la limite élastique en traction et en éclatement, à température ambiante principalement, ont montré également une dégradation très nette par rapport au Zircaloy 4 standard en cas de diminution de la teneur en étain jusqu'à 0,5%, en l'absence d'une augmentation de la teneur en oxygène ; ils ont montré qu'on retrouve pratiquement la même limite élastique que dans le cas du Zircaloy 4 à 1,5% d'étain lorsque l'alliage détendu contient 0,19 à 0,20% d'oxygène.

Ces résultats favorables sont obtenus dans le cas d'un alliage détendu : dans le cas au contraire d'un alliage recristallisé, une dégradation de la tenue au fluage thermique provoquée par la diminution de la teneur en étain subsiste même pour une teneur élevée en oxygène.

Dans certains cas cependant, il peut être préféré, pour garantir la stabilité en réacteur et donner de bonnes propriétés de résistance à la corrosion à la couche interne, de recristalliser l'ensemble de la gamme par le traitement thermique final. Ce traitement peut alors être effectué à 580°C ± 25°C.

### Compositions contenant également du silicium

Une teneur de silicium allant jusqu'à 200 ppm peut être ajoutée pour améliorer la tenue à la corrosion généralisée, alors qu'elle n'aurait pas d'effet notable sur la corrosion nodulaire (que l'on rencontre plutôt dans les réacteurs à eau bouillante).

### Composition contenant du niobium, à faible teneur en niobium et teneur variable en oxygène

Dans le cas d'une couche externe contenant de l'étain et n'ayant pas une teneur appréciable de niobium, une teneur d'oxygène beaucoup plus élevée que dans les alliages types Zircaloy 2, 3 et 4 habituels permet d'obtenir des caractéristiques mécaniques se rapprochant de celles du Zircaloy 4, en particulier lorsque la gaine est à l'état détendu.

Dans le cas d'une couche externe dont le seul additif métallique (à l'exception des impuretés inévitables) est le niobium, l'alliage à l'état détendu même fortement chargé en oxygène, présente une tenue au fluage thermique très médiocre, cet inconvénient est écarté en retenant un alliage dopé en oxygène et simultanément en soumettant la gaine à un traitement thermique final de recristallisation. De plus pour cet alliage ZrNb, la recristallisation et l'ajout d'oxygène permettent également d'améliorer considérablement la tenue à la corrosion sous contrainte en présence d'iode, d'augmenter la limite d'endurance en fatigue, de renforcer les caractéristiques mécaniques conventionnelles et de retrouver une tenue en APRP (accident par perte de réfrigérant primaire) aussi bonne que celle du Zircaloy 4 à l'état recristallisé.

### Comparaison entre les alliages Zircaloy 4 et les alliages contenant du niobium

La même comparaison que ci-dessus a été effectuée entre d'une part les alliages A et B, et des alliages de niobium E et F :
- alliage E : 1% de niobium et 0,08 à 0,10% d'oxygène
- alliage F : 1% de niobium et 0,125% d'oxygène.

Les alliages à 1% seulement de niobium, même fortement chargés en oxygène, présentent, à l'état détendu, des caractéristiques mécaniques trop défavorables, en particulier de fluage pour qu'on puisse envisager leur utilisation.

En revanche, les essais effectués sur des alliages à l'état métallurgique recristallisé ont fait apparaître l'intérêt de l'alliage F dopé en oxygène.

On obtient en effet les résultats suivants, pour le fluage thermique à 400°C pendant 240 h sous 130 MPa :
- alliage A recristallisé : 0,5 à 0,6%
- alliage B recristallisé : 1%
- alliage E recristallisé : 0,60%
- alliage F recristallisé : 0,25 à 0,30%.

Par ailleurs, la mesure de la limite élastique a fait apparaître que la dégradation des caractéristiques, lorsqu'on passe de l'alliage A ou B à l'alliage E, est presque totalement compensée avec l'alliage F.

On donnera maintenant les résultats d'une comparaison entre une gaine massive en alliage A ou B, c'est-à-dire en Zircaloy 4, et une gaine duplex ayant une couche interne représentant 80% de l'épaisseur et une couche externe représentant 20% de l'épaisseur, la couche interne étant en alliage A ou B et la couche externe en alliage C, D ou F.

Les résultats obtenus ont alors été les suivants, pour l'état recristallisé :
- En fluage thermique à 400°C, sous 130 MPa pendant 240 heures, les déformations diamétrales typiques obtenues sont :
   - Alliage massif A : 0,30-0,40%
   - Alliage massif B : 1%
   - Duplex B/C : 1,3-1,45%
   - Duplex B/D : 1,1-1,25%
   - Duplex A/F : 0,75-0,85%.
- En éclatement à 400°C les limites élastiques R_{p0,2} sont :
   - Alliage massif A : 215 MPa
   - Alliage massif B : 182 MPa
   - Duplex B/C : 176 MPa
   - Duplex B/D : 194 MPa
   - Duplex A/F : 187 MPa.

L'analyse de ces résultats montre que :
a) le dopage en oxygène de l'alliage type D constituant le placage externe du tube duplex B/D permet :
   - d'améliorer la tenue au fluage thermique et les caractéristiques mécaniques par rapport au duplex B/C faiblement allié en oxygène ;
   - d'amener ces propriétés au même niveau que celles obtenues pour l'alliage massif B.
b) La teneur élevée en oxygène de l'alliage F du duplex A/F :
   - conduit à un renforcement de la résistance au fluage et à des caractéristiques mécaniques améliorées
   - permet de retrouver des propriétés voisines, voire supérieures, à celles de l'alliage massif B.

De plus, le choix de l'état recristallisé combiné au dopage en oxygène pour les duplex B/D et A/F permet également d'améliorer la tenue à la corrosion sous contrainte en présence d'iode et la croissance sous irradiation et d'obtenir une texture plus radiale des plans de phase du réseau cristallin.

De façon générale le dopage en oxygène améliore la tenue mécanique et en particulier la limite élastique. La recristallisation de la couche interne, lorsque le traitement final la provoque, améliore la résistance à la corrosion sous contrainte par l'iode provenant du combustible. La recristallisation d'ensemble, lorsque le traitement final la provoque, améliore la résistance globale de la gaine en fluage à chaud.

## Revendications

1. Crayon de combustible destiné à un réacteur nucléaire refroidi et modéré par de l'eau, comprenant des pastilles de combustible enfermées dans une gaine ayant une couche interne en alliage à base de zirconium qui contient, en poids, :
- 1,20 à 1,70% d'étain,
- 0,18 à 0,24% de fer,
- 0,07 à 0,13% de chrome,
le total des teneurs en fer et en chrome étant compris entre 0,28 et 0,37%, et ayant une couche externe en un alliage à base de zirconium contenant, en dehors du zirconium et des impuretés inévitables :
**(a)**
- de 0,35 à 0,65% en poids d'étain,
- de 0,18 à 0,25% de fer,
- de 0,07 à 0,13% de chrome, et
- 0,19 à 0,23% en poids d'oxygène, la somme des teneurs en fer, chrome, étain et oxygène étant inférieure à 1,26% en poids,
**(b)** ou 0,80 à 1,20% en poids de niobium, la teneur en oxygène étant alors comprise entre 0,10 et 0,16% en poids,
l'épaisseur de la couche externe étant dans tous les cas comprise entre 10 et 25% de l'épaisseur totale de la gaine.

2. Crayon selon la revendication 1, caractérisé en ce que la couche externe n'a pas de teneur appréciable de niobium et en ce que la gaine est à l'état métallurgique détendu.

3. Crayon selon la revendication 1, dans lequel le seul additif métallique de la couche externe est le niobium, caractérisé en ce que la gaine est recristallisée.

4. Crayon suivant la revendication 1, caractérisé en ce que la couche externe ne contient pas de teneur appréciable en niobium mais contient du silicium à une teneur ne dépassant pas 200 ppm et en ce que la gaine est à l'état métallurgique détendue de façon à avoir une limite élastique élevée.

5. Crayon selon l'une quelconque des revendications 1 à 4, caractérisé en ce qu'une teneur de fer, de chrome ou de niobium de 0 à 0,05% est remplacée par une teneur équivalente de vanadium.

6. Procédé de fabrication de gaine de crayon selon la revendication 1, caractérisé en ce que : on réalise une billette composite contenant une partie interne en Zircaloy 4 et une ébauche externe constituée de l'alliage contenant de l'étain, du fer, du chrome et de l'oxygène par soudage aux extrémités ; on file la billette vers 650°C ; on transforme le tube duplex ébauché ainsi obtenu par des cycles thermo-mécaniques successifs ; et on effectue une étape finale de recuit.

7. Procédé selon la revendication 6, caractérisé en ce que le recuit final est effectué vers 485°C.

8. Procédé selon la revendication 6 ou 7, caractérisé en ce que les cycles comprennent des recuits successifs à 735°C et 700°C environ.

9. Procédé selon la revendication 6, caractérisé en ce que le recuit final est effectué à une température de 580°C ± 25°C provoquant la recristallisation des couches interne et externe.

10. Procédé de fabrication de gaine de crayon selon la revendication 3, caractérisé en ce que : on réalise une billette composite contenant une partie interne en Zircaloy 4 et une ébauche externe constituée de l'alliage zirconium-niobium-oxygène, par soudage aux extrémités ; on file la billette vers 650°c ; on transforme le tube duplex ébauché ainsi obtenu par des cycles thermométallurgiques successifs, comportant des recuits de recristallisation intermédiaires entre passes de laminage ; et on effectue une étape finale de recristallisation.

11. Procédé selon la revendication 10, caractérisé en ce que le recuit final de recristallisation est effectué vers 580°C.

12. Procédé selon la revendication 10 ou 11, caractérisé en ce que les recuits de recristallisation intermédiaires sont réalisés les premiers à 580°C et les derniers à 700°C environ.

## Patentansprüche

1. Kernbrennstab, der für einen wassergekühlten und -moderierten Kernreaktor bestimmt ist, der Brennstofftabletten umfaßt, die in einer Hülle eingeschlossen sind, die eine Innenschicht aus einer Legierung auf Zirkonbasis aufweist, die in Gewichtsprozent enthält:
- 1,20 bis 1,70 % Zinn,
- 0,18 bis 0,24 % Eisen,
- 0,07 bis 0,13 % Chrom,
wobei der Gesamtgehalt an Eisen und Chrom 0,28 bis 0,37 % beträgt, und eine Außenschicht aus einer Legierung auf Zirkonbasis, die außer Zirkon und unvermeidlichen Unreinheiten enthält:
(a)
- 0,35 bis 0,65 Gew.-% Zinn
- 0,18 bis 0,25 % Eisen
- 0,07 bis 0,13 % Chrom, und
- 0,19 bis 0,23 Gew.-% Sauerstoff, wobei die Summe der Gehalte an Eisen, Chrom, Zinn und Sauerstoff unter 1,26 Gew.-% liegt,
(b) oder 0,80 bis 1,20 Gew.-% Niob, wobei der Sauerstoffgehalt dann 0,10 bis 0,16 Gew.-% beträgt,
wobei die Stärke der Außenschicht in jedem Fall 10 bis 25 % der Gesamtstärke der Hülle ausmacht.

2. Brennstab nach Anspruch 1, dadurch gekennzeichnet, daß die Außenschicht keinen relevanten Niobgehalt aufweist, und daß sich die Hülle im spannungslosen metallurgischen Zustand befindet.

3. Brennstab nach Anspruch 1, bei dem der einzige metallische Zusatzstoff der Außenschicht Niob ist, dadurch gekennzeichnet, daß die Hülle rekristallisiert ist.

4. Brennstab nach Anspruch 1, dadurch gekennzeichnet, daß die Außenschicht keinen relevanten Niobgehalt, aber einen Siliziumgehalt von nicht über 200 ppm aufweist, sowie dadurch, daß die Hülle sich im spannungslosen metallurgischen Zustand befindet, so daß sie eine hohe Elastizitätsgrenze hat.

5. Brennstab nach einem der Ansprüche 1 bis 4, dadurch gekennzeichnet, daß ein Gehalt an Eisen, Chrom oder Niob von 0 bis 0,05 % durch einen entsprechenden Vanadingehalt ersetzt wird.

6. Verfahren zur Herstellung einer Brennstabhülle nach Anspruch 1, dadurch gekennzeichnet, daß: man einen Verbundbolzen herstellt, der einen Innenteil aus Zircaloy 4 enthält und einen Außenrohling aus der Legierung, die Zinn, Eisen, Chrom und Sauerstoff enthält, durch Schweißen an den Enden; man den Bolzen gegen 650°C extrudiert; man das so erhaltene, vorgepreßte Duplexrohr durch aufeinanderfolgende thermomechanische Zyklen umformt; und man ein abschließendes Glühen vornimmt.

7. Verfahren nach Anspruch 6, dadurch gekennzeichnet, daß das abschließende Glühen gegen 485°C erfolgt.

8. Verfahren nach Anspruch 6 oder 7, dadurch gekennzeichnet, daß die Zyklen aufeinanderfolgende Glühschritte gegen etwa 735 und 700°C umfassen.

9. Verfahren nach Anspruch 6, dadurch gekennzeichnet, daß das abschließende Glühen bei einer Temperatur von 580°C ± 25°C erfolgt, was die Rekristallisation der Innen- und Außenschicht bewirkt.

10. Verfahren zur Herstellung einer Brennstabhülle nach Anspruch 3, dadurch gekennzeichnet, daß: man einen Verbundbolzen herstellt, der einen Innenteil aus Zircaloy 4 enthält und einen Außenrohling aus der ZirkonNiob-Sauerstoff-Legierung durch Schweißen an den Enden; man den Bolzen gegen 650°C extrudiert; man das so erhaltene, vorgepreßte Duplexrohr durch aufeinanderfolgende thermometallurgische Zyklen umformt, die Zwischenrekristallisationsglühschritte zwischen Walzarbeitsgängen umfassen; und man einen abschließenden Rekristallisationsschritt vornimmt.

11. Verfahren nach Anspruch 10, dadurch gekennzeichnet, daß das abschließende Rekristallisationglühen gegen 580°C erfolgt.

12. Verfahren nach Anspruch 10 oder 11, dadurch gekennzeichnet, daß von den Zwischenrekristallisationsglühschritten die ersten auf etwa 580°C und die letzten auf etwa 700°C erfolgen.

## Claims

1. Fuel rod for a water-cooled and moderated nuclear reactor, comprising fuel pellets enclosed in cladding having an inner layer of a zirconium-based alloy which contains, by weight :
- 1.20% to 1.70% of tin
- 0.18% to 0.24% of iron
- 0.07% to 0.13% of chromium,
the sum of the iron plus chromium content being comprised between 0.28% and 0.37%, and having an outer layer of a zirconium-based alloy containing, beside zirconium and unavoidable impurities:
(a)
- 0.35% to 0.65% by weight of tin
- 0.18% to 0.25% of iron
- 0.07 to 0.13% of chromium, and
- 0.19% to 0.23% oxygen, with the sum of the iron, chromium, tin, and oxygen contents being less than 1.26% by weight,
(b)
- or 0.80% to 1.20% by weight of niobium, the oxygen content being then comprised between 0.10% and 0.16% by weight,
the thickness of the outer layer being always comprised between 10% and 25% of the total thickness of the cladding.

2. Fuel rod according to claim 1, characterized in that the outer layer has no appreciable content of niobium and in that the cladding is metallurgically stress-relieved.

3. Fuel rod according to claim 1, wherein the only metal additive of the outer layer is niobium, characterized in that the cladding is recrystallized.

4. Fuel rod according to claim 1, characterized in that the outer layer does not contain an appreciable content of niobium, but contains silicon in an amount not exceeding 200 ppm and in that the cladding is metallurgically stress relieved so as to have a high degree of yield strength.

5. Fuel rod according to any one of claims 1-4, characterized in that an amount of 0 to 0.05% of iron, chromium or niobium is replaced with an equivalent amount of vanadium.

6. Method for manufacturing a fuel rod cladding according to claim 1, characterized by the steps of: forming a composite billette having an inner layer of Zircaloy 4 and an external blank constituted of the tin, iron, chromium and oxygen containing alloy, by end welding; extruding the billette at about 650°C; transforming the duplex tube blank so obtained by a succession of thermo-mechanical cycles; and carrying out a final step of thermally annealing.

7. Method according to claim 6, characterized in that the final annealing is at about 485°C.

8. Method according to claim 6 or 7, characterized in that the cycles comprise successive annealings at about 735°C and 700°C.

9. Method according to claim 6, characterized in that the final annealing is carried out at a temperature of 580°C ± 25°C causing recrystallization of the inner and outer layers.

10. Method of manufacture of a cladding of a rod according to claim 3, characterized by the steps of: providing a composite billette containing an inner layer of Zircaloy 4 and an outer blank consisting of the zirconium-niobium-oxygen alloy, by end welding; extruding the billette at about 650°C; transforming the duplex-tube blank so obtained by a succession of thermometallurgical cycles comprising intermediary recrystallization heat treatments between rolling steps; and carrying out a final recrystallization step.

11. Method according to claim 10, characterized in that the final recrystallization heat treatment is carried out at about 580°C.

12. Method according to claim 10 or 11, characterized in that the intermediary recrystallization heat treatments are carried out, the first ones at about 580°C and the last ones at about 700°C.
